# EUROPÄISCHE PATENTSCHRIFT

(11) **EP 1 037 291 B1**
(45) Veröffentlichungstag und Bekanntmachung des Hinweises auf die Patenterteilung: **02.07.2003**
(21) Anmeldenummer: 99105593.0
(22) Anmeldetag: 18.03.1999
(51) Int. Cl.: H01M 2/06

(54) **Poldurchführung für elektrische Akkumulatorenzellen**
Terminal feed-through for electric storage cells
Traversée de pôle pour accumulateurs électriques

(43) Veröffentlichungstag der Anmeldung: 20.09.2000
(73) Patentinhaber: HAWKER GmbH, 58089 Hagen (DE)
(72) Erfinder: Lüger, Bernd, Dipl.-Ing., 44536 Lünen (DE); Pichlo, Hans-Walter, 58135 Hagen (DE)
(74) Vertreter: Patentanwälte Dipl.-Ing. Conrad Köchling Dipl.-Ing. Conrad-Joachim Köchling

(56) Entgegenhaltungen:
- EP-A- 0 319 741
- DE-C- 3 230 628
- DE-C- 4 210 431
- DE-C- 4 319 923

## Beschreibung

Die Erfindung betrifft eine Poldurchführung für eine elektrische Akkumulatorenzelle, insbesondere eine Bleiakkumulatorenzelle, deren Kunststoffdeckel eine tubusförmige Öffnung aufweist, durch welche ein Polschaft unter Zwischenanordnung einer dauerelastischen Hülse abgedichtet hindurchgeführt ist, wobei das in Einbaulage untere, in der Zelle befindliche Ende der Hülse zu einem radial nach außen gerichteten Dichtring geformt ist, dessen Außendurchmesser größer ist als der der dem Innendurchmesser des Deckeltubus entspricht, das obere Ende der Hülse zu einem radial einwärts gerichteten Ringflansch geformt ist, der mit seiner Unterseite eine obere Polschulter dichtend übergreift, wobei die Oberseite dieses Ringflansches zum Zwecke einer Abdichtung des Poles gegen den aufliegenden Zellenverbinder dem Profil einer O-Ringdichtung nachgestaltet ist.

Eine derartige Poldurchführung ist aus der EP 0 319 741 B1 bekannt. Bei der bekannten Poldurchführung ist die Hülse axial unverschieblich am Deckeltubus angeordnet, wozu die Hülse insbesondere an ihrem bezüglich der Zelle innen liegenden Ende einen nach radial außen gerichteten Ringflansch aufweist, der zwischen der unteren Randkante des Deckeltubus und einer unteren Polschulter eingespannt ist. Diese Ausbildung kann zur Folge haben, daß bei einer axialen nach außen gerichteten Bewegung des Polabschnitts resultierend aus dem Gitterwachstum der mit dem Pol verbundenen Platten als Folge fortschreitender Korrosion der Zellendeckel erheblich belastet wird, insbesondere auch die Schweißnaht, mittels derer der Zellendeckel mit dem Zellengehäuse verbunden ist, da die bei der Verschiebung des Poles auftretenden Kräfte von der unteren Polschulter über den Ringflansch der Hülse auf die Randkante des Deckeltubus übertragen werden. Dabei hat der Pol innenliegend der Zelle vom Beginn der unteren Polschulter an, einen Durchmesser, der größer ist als der Innendurchmesser des Deckeltubus, so daß ein Eintauchen des Poles bei einer axialen Verschiebebewegung des Poles in den Deckeltubus nicht möglich ist.

Ausgehend von diesem Stand der Technik liegt der Erfindung die Aufgabe zugrunde, eine Poldurchführung gattungsgemäßer Art zu schaffen, die eine Abdichtung von Batteriezellen ohne mechanische Bearbeitung der Pole ermöglicht, die eine Dichtigkeit im Bereich des Poldurchtrittes gegen Elektrolytaustritt über die Gebrauchsdauer der Akkumulatorenzelle sicherstellt, die ein Plattenwachstum und damit eine Verschiebebewegung des Pols ohne Belastung des Zellendeckels, des Deckeltubus beziehungsweise der Schweißverbindung des Zellendeckels mit dem Zellengehäuse ermöglicht und die weitgehend konstante Bedingungen im Bereich der Dichtfläche über die Gebrauchsdauer beibehält.

Zur Lösung dieser Aufgabe wird vorgeschlagen, daß der Dichtring derart ausgebildet ist, daß er bei einer axialen Bewegung des Poles infolge eines Gitterwachstums der mit dem Pol verbundenen Platten der Zelle ein zusätzliches Dichtelement bildet, das in den Spalt zwischen Deckeltubus und Pol eingezogen ist.

Durch diese Ausbildung ist eine Abdichtung von Batteriezellen ohne mechanische Bearbeitung der Pole möglich, da der Zellendeckel mit dem Deckeltubus und der darin angeordneten dichtenden Hülse zum Zwecke der Montage in einfacher Weise auf den Pol aufgeschoben werden kann. Die Dichtigkeit gegen Elektrolytaustritt über die Gebrauchsdauer ist sichergestellt, da der am oberen Ende der Hülse angeordnete, radial einwärts gerichtete Ringflansch für eine dauerhafte Abdichtung am oberen Ende des Poles sorgt, während der Dichtring am unteren Ende der dichtenden Hülse bei der Erstinstallation eine sichere Dichtung gewährleistet und bei längerer Gebrauchsdauer auch die axiale Bewegung des Pols unbehindert zuläßt. Dabei wird mit zunehmender Axialverschiebung des Poles relativ zum Deckeltubus der Dichtring mit in die Mündung des Deckeltubus eingezogen, so daß die Dichtwirkung noch verbessert wird, wobei selbst dann, wenn der zunächst im Zelleninneren befindliche Bereich des Poles von Korrosion angegriffen ist, wenn der Pol sich axial verschiebt, durch die zusätzliche Dichtkraft des in den Spalt eingezogenen Dichtringes sicher abgedichtet ist. Zudem bildet bei der Erstmontage der Poldurchführung der Dichtring eine Sicherung dagegen, daß die Hülse beim Aufstecken des Deckels mit dem Deckeltubus auf den Pol aus dem Deckeltubus herausgedrängt wird, da der radial vorragende Dichtring im Montagefall eine ausreichende Verschiebesicherung bildet, weil er im Extremfall gegen die den Zelleninneren zugewandte Randkante des Deckeltubus mit dem Dichtring anliegt.

Aus der DE 43 19 923 C1 ist zwar eine Poldurchführung bekannt, bei der auch eine Axialbewegung des Polbolzens durch ein Dichtungselement ausgeglichen werden kann. Jedoch ist dort ein balgartiger Abschnitt am hülsenförmigen Dichtungselement vorgesehen, durch den ein Längenwachstum beziehungsweise eine Verschiebung des Polbolzens ausgeglichen werden kann. Dabei ist aber nicht nur die Montage wegen des balgartig ausgebildeten Teils des Dichtungselementes erschwert, sondern die Dichtigkeit ist auch über die Gebrauchsdauer nicht unbedingt gewährleistet, da keine Maßnahmen zur Verbesserung der Dichtung vorgesehen sind, wenn der schon korrodierte Teil des Poles bei Axialverschiebung des Poles in das Dichtungselement eintaucht, so daß hierdurch die Dichtwirkung vermindert wird. Entgegen dem Vorschlag der Erfindung ist bei der Ausbildung gemäß Stand der Technik die Dichtung nicht mit ihrem wesentlichen hülsenförmigen Bereich ständig an der gleichen Stelle des Poles dichtend angelegt, sondern bei einer Axialverschiebung des Poles ändern sich auch die Angriffspunkte der hülsenartigen Dichtung an dem Pol, was zur Verminderung der Dichtigkeit führen kann.

Bevorzugt ist ferner vorgesehen, daß der Pol von der oberen Polschulter über seine den Deckeltubus durchsetzende Länge und darüber hinaus einen gleichbleibenden Durchmesser aufweist, der geringer als der Innendurchmesser des Deckeltubus ist, wobei der Pol an seinem in die Zelle hineinragenden, über den Deckeltubus vorragenden Ende mindestens über ein solches Maß diesen Durchmesser aufweist, welches dem axialen Platzbedarf entspricht, den der Dichtring in der umgeklappten, in den Spalt zwischen Deckeltubus und Pol eingezogenen Stellung einnimmt.

Durch diese Ausbildung ist sichergestellt, daß der Pol bei einer axialen Verschiebung infolge der fortschreitenden Korrosion der Platten ohne wesentliche Einwirkung auf den Deckeltubus und damit auf den Deckel beziehungsweise dessen Schweißnähte mit dem Gehäuse wandern kann, wobei zudem sichergestellt ist, daß der Dichtring aus der ursprünglich radial abragenden Lage in eine quasi tangential zum Pol gerichtete Lage umschlagen kann, da keine störende Polschulter oder dergleichen vorhanden ist, die das Umschlagen des Dichtringes behindern könnte.

Desweiteren ist bevorzugt vorgesehen, daß die Hülse im zwischen den Ringflansch und dem Dichtring befindlichen Bereich radial außen umlaufende Dichtlippen aufweist, die an der Innenwandung des Deckeltubus dichtend anliegen.

Diese Ausbildung ist für die gewünschte dauerhafte Dichtigkeit förderlich.

Zudem ist bevorzugt vorgesehen, daß die radiale Kompression der Hülse in Einbausollage größer 2 % und kleiner 30 % ist.

Dabei ist bevorzugt, daß die Kompression etwa 10 % beträgt.

Ein Ausführungsbeispiel der Erfindung ist in der Zeichnung dargestellt und im folgenden näher beschrieben. Es zeigt:

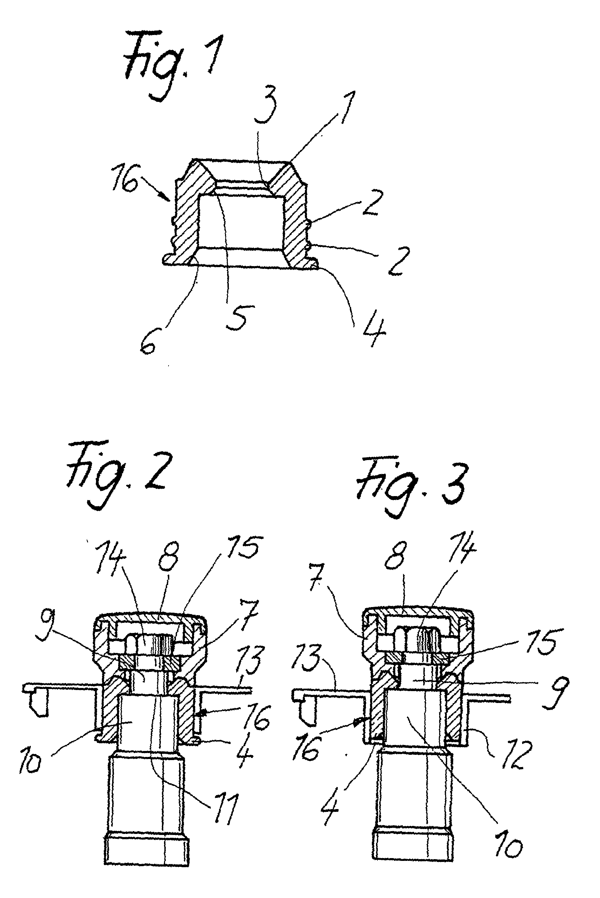

- Figur 1: eine dauerelastische Hülse im Längsschnitt gesehen;
- Figur 2: eine Poldurchführung in der Einbausituation;
- Figur 3: desgleichen nach längerer Gebrauchsdauer.

In der Zeichnung gemäß Figur 2 und Figur 3 ist eine Poldurchführung für eine elektrische Akkumulatorenzelle gezeigt. Der aus Kunststoff bestehende Zellendeckel 13 weist einen Deckeltubus 12 auf, durch den ein Polschaft 10 eines Zellenpoles unter Zwischenanordnung einer dauerelastischen Hülse 16 abgedichtet hindurchgeführt ist. Das in Einbaulage untere, in der Zelle befindliche Ende der Hülse 16 ist zu einem nach radial außen gerichteten Dichtring 4 geformt, dessen Außendurchmesser größer ist als der" der dem Innendurchmesser des Deckeltubus 12 entspricht. Das obere Ende der Hülse 16 ist zu einem radial einwärts gerichteten Ringflansch 3 geformt, der in der Einbaulage mit seiner Unterseite eine obere Polschulter 11 dichtend übergreift. Die Oberseite dieses Ringflansches 3 ist zum Zwecke einer Abdichtung des Poles 10 gegen den aufliegenden Zellenverbinder 15, der in einer Verbinderkammer 7 mit einem Verbinderdeckel 8 angeordnet ist, dem Profil einer O-Ringdichtung 1 nachgestaltet.

Im Ausführungsbeispiel liegt die Verbinderkammer 7 unmittelbar auf dem Dichtbereich mit der O-Ringdichtung 1 auf.

Im Ausführungsbeispiel ist zusätzlich mit Bezugszeichen 9 die Poleinlage bezeichnet. Bei 14 ist die Polschraube angegeben. Bei 5 ist die an die obere Polschulter 11 anlegbare Dichtfläche 5 bezeichnet.

Erfindungsgemäß ist der Dichtring 4 derart ausgebildet, daß er bei einer axialen Bewegung des Poles 10 infolge eines Gitterwachstums der mit dem Pol verbundenen Platten der Zelle ein zusätzliches Dichtelement bildet, das in den Spalt zwischen Deckeltubus 12 und Pol 10 eingezogen ist, wie anschaulich aus der Gegenüberstellung der Figuren 2 und 3 ersichtlich ist.

Hierbei weist der Pol 10 von der oberen Polschulter 11 über seine den Deckeltubus 12 durchsetzende Länge und mindestens über ein erhebliches Stück darüber hinaus einen gleichbleibenden Durchmesser auf, der geringer als der Innendurchmesser des Deckeltubus 12 ist, insbesondere geringer, als der Freiraum, der zwischen der im Deckeltubus 12 angeordneten Hülse 16 verbleibt, wobei der Pol 10 an seinem in die Zelle hineinragenden, über den Deckeltubus 12 vorragenden Ende mindestens über eine solche Länge diesen Durchmesser aufweist, welche dem axialen Platzbedarf entspricht, den der Dichtring 4 einnimmt, wenn er in den Spalt zwischen Deckeltubus 12 und Pol 10 umgeklappt und eingezogen ist.

Die Hülse 16 weist in dem zwischen dem Ringflansch 3 und dem Dichtring 4 befindlichen Bereich radial außen umlaufende Dichtlippen 2 auf, die in der Gebrauchslage an der Innenwandung des Deckeltubus 12 dichtend anliegen.

Die Hülse 16 besteht vorzugsweise aus Gummi oder Elastomermaterial. Die radiale Kompression der Hülse in Einbausollage ist vorzugsweise größer als 2 % und kleiner als 30 % bevorzugt etwa 10 %.

Der Ringflansch 3 ist kleiner als der äußere Poldurchmesser 10 und so bemessen, daß gerade die Poleinlage 9 unter Spannung hindurchpaßt. Die Dichtfläche 5 ist plan und soll die Polschulter 11 des Poles 10 abdichten. Die Montageschräge 6 dient zum leichteren Aufschieben der Poldurchführung auf den Pol 10, wobei die Anordnung der Montageschräge auch den Umklappvorgang erleichtert, so daß sich die Stellung des Dichtringes 4 gemäß Figur 3 erleichtert einstellt. Zur Montage wird die in dem Deckel 13 vormontierte Poldichtung während der Deckelverschweißung so auf den Pol 10 aufgeschoben, daß die Dichtfläche 5 auf der Polschulter 11 aufliegt. Anschließend wird der Verbinder 15 auf den Pol aufgeschraubt. Hierbei drückt die Verbinderkammer 7 des Verbinders 15 auf die O-Ringdichtung 1, wobei gleichzeitig die Dichtfläche 5 gegen die Polschulter 11 gepreßt wird. Gleichzeitig werden die umlaufenden Dichtlippen 2 der Poldurchführung gegen die Innenwandung des Deckeltubus 14 gedrückt. Durch diese Montage wird eine elektrolytdichte Durchführung zwischen dem Deckeltubus 12, dem Pol 10 und dem Verbinder 15 erreicht. Zur Vervollständigung der Verbindermontage ist in der Zeichnung noch die Polschraube 14 und der Verbinderdeckel 8 dargestellt. In Figur 3 ist die Poldurchführung in dem Zustand gezeigt, in welchem der Pol 10 axial nach oben gewandert ist. Die Hülse 16 ist dabei nach oben verschoben und deren Dichtring 4 ist nach unten umgeklappt. In dieser Stellung ist der Dichtring 4 zwischen dem Deckeltubus 12 und dem Pol 10 eingezogen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Poldurchführung für eine elektrische Akkumulatorenzelle, insbesondere eine Bleiakkumulatorenzelle, deren Kunststoffdeckel (13) eine tubusförmige Öffnung aufweist, durch welche ein Polschaft unter Zwischenanordnung einer dauerelastischen Hülse (16) abgedichtet hindurchgeführt ist, wobei das in Einbaulage untere, in der Zelle befindliche Ende der Hülse (16) zu einem radial nach außen gerichteten Dichtring (4) geformt ist, dessen Außendurchmesser größer ist als der, der dem Innendurchmesser des Deckeltubus (12) entspricht, das obere Ende der Hülse (16) zu einem radial einwärts gerichteten Ringflansch (3) geformt ist, der mit seiner Unterseite eine obere Polschulter (11) dichtend übergreift, wobei die Oberseite dieses Ringflansches (3) zum Zwecke einer Abdichtung des Poles (10) gegen den aufliegenden Zellenverbinder dem Profil einer O-Ringdichtung (1) nachgestaltet ist, **dadurch gekennzeichnet, daß** der Dichtring (4) derart ausgebildet ist, daß er bei einer axialen Bewegung des Poles (10) infolge eines Gitterwachstums der mit dem Pol (10) verbundenen Platten der Zelle ein zusätzliches Dichtelement bildet, das in den Spalt zwischen Deckeltubus (12) und Pol (10) eingezogen ist.

2. Poldurchführung nach Anspruch 1, **dadurch gekennzeichnet, daß** der Pol (10) von der oberen Polschulter (11) über seine den Deckeltubus (12) durchsetzende Länge und darüber hinaus einen gleichbleibenden Durchmesser aufweist, der geringer als der Innendurchmesser des Deckeltubus (12) ist, wobei der Pol (10) an seinem in die Zelle hineinragenden, über den Deckeltubus (12) vorragenden Ende mindestens über ein solches Maß diesen Durchmesser aufweist, welches dem axialen Platzbedarf entspricht, den der Dichtring (4) in der umgeklappten, in den Spalt zwischen Deckeltubus (12) und Pol (10) eingezogenen Stellung einnimmt.

3. Poldurchführung nach Anspruch 1 oder 2, **dadurch gekennzeichnet, daß** die Hülse (16) im zwischen dem Ringflansch (3) und dem Dichtring (4) befindlichen Bereich radial außen umlaufende Dichtlippen (2) aufweist, die an der Innenwandung des Deckeltubus (12) dichtend anliegen.

4. Poldurchführung nach einem der Ansprüche 1 bis 3, **dadurch gekennzeichnet, daß** die radiale Kompression der Hülse (16) in Einbausollage größer 2 % und kleiner 30 % ist.

5. Durchführung nach Anspruch 4, **dadurch gekennzeichnet, daß** die Kompression etwa 10 % beträgt.

## Claims

1. Terminal feed-through for an electric storage cell, in particular a lead storage cell, the plastics cover (13) of which has a tubular opening through which a terminal shank is passed in a sealed fashion with the interposition of a permanently elastic sleeve (16), wherein the end of the sleeve (16) which is located in the cell and is the lower end in the installed position is shaped into a sealing ring (4) which is directed radially outward and the outside diameter of which is greater than that which corresponds to the inside diameter of the cover tube (12), the upper end of the sleeve (16) is shaped into an annular flange (3) which is directed radially inward and which engages with its underside over an upper terminal shoulder (11) in a sealing fashion, wherein the upper side of this annular flange (3) is configured according to the profile of an 0-ring seal (1) for the purpose of sealing the terminal (10) against the applied cell connector, **characterised in that** the sealing ring (4) is formed such that it creates an additional sealing element when the terminal (10) moves axially as a result of a grid growth of the plates of the cell which are connected to the terminal (10), which sealing element is drawn into the gap between the cover tube (12) and the terminal (10).

2. Terminal feed-through according to Claim 1, **characterised in that** the terminal (10) has a constant diameter from the upper terminal shoulder (11) over its length passing through the cover tube (12) and beyond which is smaller than the inside diameter of the cover tube (12), wherein, at its end which projects into the cell and beyond the cover tube (12), the terminal (10) has this diameter at least over an extent which corresponds to the axial space requirement of the sealing ring (4) in the folded-over position drawn into the gap between the cover tube (12) and the terminal (10).

3. Terminal feed-through according to Claim 1 or 2, **characterised in that** the sleeve (16) has sealing lips (2) circulating radially outward in the region located between the annular flange (3) and the sealing ring (4), which lips lie in a sealing fashion against the inner wall of the cover tube (12).

4. Terminal feed-through according to any one of Claims 1 to 3, **characterised in that** the radial compression of the sleeve (16) in the specified installed position is greater than 2 % and less than 30 %.

5. Feed-through according to Claim 4, **characterised in that** the compression is approximately 10 %.

## Revendications

1. Traversée de pôle pour un élément d'accumulateur électrique, en particulier un élément d'accumulateur au plomb, dont le couvercle en plastique (13) présente une ouverture en forme de tube à travers laquelle est passée, de manière étanche, avec intercalation d'un manchon (16) à élasticité permanente, une tige polaire, l'extrémité inférieure du manchon (16), située dans l'élément, formant une bague d'étanchéité (4) dirigée radialement vers l'extérieur, dont le diamètre extérieur est supérieur à celui qui correspond au diamètre intérieur du tube de couvercle (12), l'extrémité supérieure du manchon (16) formant une collerette annulaire (3) dirigée radialement vers l'intérieur, dont la face inférieure recouvre de manière étanche un épaulement polaire supérieur (11), la face supérieure de cette collerette annulaire (3) étant formée de manière à avoir le profil d'un joint torique (1) pour assurer l'étanchéité du pôle (10) vis-à-vis de la connexion d'éléments reposant dessus, **caractérisée par le fait que** la bague d'étanchéité (4) est conçue de telle façon qu'elle forme, en cas de mouvement axial du pôle (10) à la suite d'une croissance de grille des plaques de l'élément reliées au pôle (10), un élément d'étanchéité supplémentaire qui s'insère dans l'interstice entre le tube de couvercle (12) et le pôle (10).

2. Traversée de pôle selon la revendication 1, **caractérisée par le fait que** le pôle (10) présente, depuis l'épaulement polaire supérieur (11), sur sa longueur qui traverse le tube de couvercle (12) et au-delà, un diamètre constant qui est inférieur au diamètre intérieur du tube de couvercle (12), le pôle (10) présentant, à son extrémité dépassant dans l'élément, faisant saillie du tube de couvercle (12), ce diamètre au moins sur la longueur qui correspond à l'encombrement axial qu'occupe la bague d'étanchéité (4) dans la position rabattue, insérée dans l'interstice entre le tube de couvercle (12) et le pôle (10).

3. Traversée de pôle selon la revendication 1 ou 2, **caractérisée par le fait que** le manchon (16) présente dans la zone située entre la collerette annulaire (3) et la bague d'étanchéité (4) des lèvres d'étanchéité périphériques extérieures radiales (2) qui portent de manière étanche sur la paroi intérieure du tube de couvercle (12).

4. Traversée de pôle selon l'une des revendications 1 à 3, **caractérisée par le fait que** la compression radiale du manchon (16) est supérieure à 2 % et inférieur à 30 % en position nominale de montage.

5. Traversée selon la revendication 4, **caractérisée par le fait que** la compression est d'environ 10 %.
